# EUROPÄISCHE PATENTSCHRIFT

(11) **EP 0 608 501 B1**
(45) Veröffentlichungstag und Bekanntmachung des Hinweises auf die Patenterteilung: **08.01.1997**
(21) Anmeldenummer: 93118204.2
(22) Anmeldetag: 10.11.1993
(51) Int. Cl.: F15B 15/08, F16J 15/56

(54) **Abdichteinrichtung für einen Bandzylinder**
Sealing device for a band cylinder
Dispositif d'étanchéité pour un vérin à bande

(30) Priorität: 29.01.1993 DE 9301210 U
(43) Veröffentlichungstag der Anmeldung: 03.08.1994
(73) Patentinhaber: Festo KG, D-73734 Esslingen (DE)
(72) Erfinder: Stoll, Kurt, Dipl.-Ing., D-73732 Esslingen (DE); Volzer, Johannes, Dipl.-Ing., D-72636 Frickenhausen (DE)
(74) Vertreter: Abel, Martin, Dipl.-Ing.

(56) Entgegenhaltungen:
- EP-A- 0 544 984
- GB-A- 2 254 663

## Beschreibung

Die Erfindung betrifft eine Abdichteinrichtung für einen Bandzylinder, zur Abdichtung des als Zugmittel dienenden bewegbaren Bandes gegenüber der von diesem durchsetzten Abschlußwand des Zylindergehäuses, mit einem als in sich geschlossener Ringkörper ausgebildeten Dichtelement, das eine ununterbrochene umlaufende Dichtlippe mit gummielastischen Eigenschaften aufweist, die eine ein Hindurchführen des Bandes ermöglichende schlitzartige Durchbrechung begrenzt und die sowohl an den beiden Breitseiten als auch an den beiden Schmalseiten des hindurchgeführten Bandes dichtend anliegt, wobei die schlitzartige Durchbrechung des Dichtelementes eine Engstelle aufweist, die von der mit dem hindurchgeführten Band zusammenarbeitenden Dichtpartie der Dichtlippe begrenzt wird, wobei sich rückseitig an die Engstelle ein zumindest teilweise von der Dichtlippe begrenzter erweiterter Durchbrechungsabschnitt anschließt.

Eine Abdichteinrichtung dieser Art geht beispielsweise aus der GB-A-22 54 663 hervor. Sie wird verwendet bei sogenannten Bandzylindern, die ein stirnseitig von Abschlußwänden begrenztes Gehäuse aufweisen. Im Gehäuse befindet sich ein längsbeweglicher Kolben, an dem ein Zugmittel in Gestalt eines Bandes angreift, das durch beide Abschlußwände nach außen geführt ist. Das Band wird über Umlenkteile außerhalb des Gehäuses umgelenkt und ist an einem Kraftabgabeglied befestigt, welches am Zylindergehäuse längsbeweglich geführt ist. Im Betrieb werden die vom Kolben abgetrennten Arbeitsräume des Gehäuses abwechselnd mit einem fluidischen Druckmittel beaufschlagt, wodurch sich der Kolben verlagert und dessen Bewegung über das Band auf das Kraftabgabeglied übertragen wird.

Der Bereich der Durchführung des Bandes durch die Abschlußwände des Zylindergehäuses ist hinsichtlich der Abdichtung sehr kritisch. Dies rührt insbesondere von der regelmäßig sehr flachen Bauform der als Zugmittel verwendeten Bänder her. Im Falle der GB-A-22 54 663 verfügt jede der beiden Abdichteinrichtungen über ein einstückiges ringförmiges Dichtelement, das eine ununterbrochen umlaufende Dichtlippe aufweist, die eine schlitzartige Durchbrechung zum Hindurchführen des Bandes entlang des gesamten Durchbrechungsumfanges begrenzt. Auf diese Weise werden Trennstellen zwischen einzelnen Dichtungsteilen vermieden, die zu Leckagen führen könnten. Die umlaufende Dichtlippe kann sich dank ihrer Flexibilität hervorragend an die Umfangskontur des jeweils abzudichtenden Bandes anpassen, und zwar sowohl im Bereich der Breitseiten als auch im Bereich der Schmalseiten des Bandes. Die Lippenform in Verbindung mit den elastischen Eigenschaften gewährleistet überdies die Möglichkeit eines reversiblen Verformens beim Hindurchführen des Bandes anläßlich der Montage des Bandzylinders. Auch die regelmäßig verdickt ausgeführten oder mit Befestigungselementen versehenen Bandenden lassen sich problemlos durch den Ringkörper hindurchfädeln, ohne daß die Gefahr einer Beschädigung der Dichtlippe besteht.

Je weichelastischer die Dichtlippe bzw. das gesamte Dichtelement ist, desto problemloser läßt sich das Band beim Zusammenbau des Bandzylinders hindurchführen. Die Verwendung weichen Materials fördert außerdem die Dichtqualität und das Anpassungsvermögen in Bezug auf die Oberfläche des Bandes. Da die Dichtlippe bei montierter Abdichteinrichtung jedoch dem Kolben des Bandzylinders zugewandt ist, sieht sie sich im Betrieb einer hohen Druckbelastung ausgesetzt, wodurch sie verstärkt gegen das Band angedrückt wird und sich die Reibungskräfte erhöhen.

Es ist die Aufgabe der vorliegenden Erfindung, eine Abdichteinrichtung der eingangs genannten Art zu schaffen, die bei leichter Montage und guter Dichtwirkung auch bei hoher Druckbelastung eine geringe Reibung gegenüber dem Band verspricht.

Diese Aufgabe wird dadurch gelöst, daß in den erweiterten Durchbrechungsabschnitt von der Rückseite des Dichtelementes her ein vom Band durchsetzbares Abstützteil hineinragt, an dem die Dichtlippe mit ihrer dem erweiterten Durchbrechungsabschnitt zugewandten Innenfläche zumindest teilweise anliegt.

Somit ragt von der Rückseite des Dichtelementes her ein vom Band durchsetzbares Abstützteil in den erweiterten Durchbrechungsabschnitt hinein. Dieses Abstützteil liegt am Rücken der Dichtlippe an und unterstützt diese. Auf diese Weise wird die Querbewglichkeit der Dichtlippen im Bereich der Dichtpartie nicht nennenswert beeinträchtigt, auch die Dichtqualität kann bei Verwendung relativ weichelastischen Materials auf einem hohen Standard gehalten werden. Gleichwohl ist die Druckabhängigkeit der Reibungskräfte sehr stark reduziert, da Teile der Dichtlippe durch das Abstützteil an der üblicherweise vorgenommenen Bewegung und Anschmiegung an das Band gehindert werden. Es wird also praktisch nur ein Teilbereich der Lippe zur eigentlichen Abdichtung verwendet, wodurch der gesamte Dichtspalt sehr kurz wird. Im Vergleich zu der Anordnung gemäß GB-A-2 254 663, aber auch den Anordnungen gemäß DE 39 14 889 A1 und AT-PS 364 621, die mit sehr langen Dichtspalten arbeiten, ergeben sich somit erhebliche Vorteile. Bei geringstmöglicher Dichtspaltlänge und hoher Flächenpressung erzielt man ein sehr gutes Abdichtverhalten.

Das Abstützteil verhindert zudem, daß die weichelastische Dichtlippe infolge eines Mitnahmeeffektes des sich bewegenden Bandes umgestülpt wird, was abgesehen von vorübergehender Undichtigkeit auch eine Beschädigung der Dichtlippe zur Folge haben könnte. Das Abstützteil übt auf die druckabgewandte Seite der Dichtlippe eine abstützende Wirkung aus.

Vorteilhafte Weiterbildungen der Erfindung sind in den Unteransprüchen aufgeführt.

Vorzugsweise handelt es sich bei dem Dichtelement insgesamt um ein einstückiges Bauteil, insbesondere ein Elastomerteil.

Zweckmäßigerweise umfaßt die Abdichteinrichtung auch ein Führungsteil, das eine im betriebsbereiten Zustand vom Band durchsetzte schlitzartige Führungsöffnung aufweist, deren Begrenzungsflächen Führungsflächen bilden, die ringsum am hindurchgeführten Band anliegen. Da das Dichtelement und das Führungsteil aufeinanderfolgend angeordnet sind, werden Querbewegungen des Bandes unterbunden, die sich negativ auf das Dichtverhalten auswirken könnten.

Die Befestigung des Dichtelementes bezüglich der Abschlußwand eines jeweiligen Bandzylinders erfolgt zweckmäßigerweise mittels eines Klemmringes der nach Art eines Überwurfteiles derart von der Vorderseite her auf das Dichtelement aufsetzbar ist, daß dessen Dichtlippe in die Ringöffnung des Klemmringes hineinragt und auch durch diese hindurchragen kann. Eine ringförmige Klemmpartie des Klemmringes drückt hierbei vorderseitig gegen eine Haltepartie des Dichtelementes, die mithin zwischen der Klemmpartie und der Abstützwand fest eingespannt wird. Die Klemmpartie kann auch noch gegen den sich an die Haltepartie anschließenden Bereich der Dichtlippe arbeiten. Insgesamt erzielt man dadurch unter anderem eine Vorspannung der dynamisch dichtenden Dichtlippe gegenüber dem Band, außerdem wird ein zuverlässiger Klemmsitz des Dichtelementes bezüglich der Abschlußwand erhalten.

Als Werkstoff für die Dichtlippe und vorzugsweise das gesamte Dichtelement kommt zweckmäßigerweise ein Elastomermaterial zum Einsatz, das vorzugsweise eine Shore-Härte zwischen 70 und 80 aufweisen kann.

Nachfolgend wird die Erfindung anhand der beiliegenden Zeichnung näher erläutert. In dieser zeigen:
- Figur 1: einen Bandzylinder in stark vereinfachter Darstellung im Längsschnitt, der im Bereich seiner beiden Abschlußwände jeweils mit einer erfindungsgemäßen Abdichteinrichtung ausgestattet ist,
- Figur 2: den in Figur 1 strichpunktiert eingekreisten Bereich II in stark vergrößerter Darstellung, aus der der Aufbau einer ersten Bauform der Abdichteinrichtung hervorgeht,
- Figur 3: eine Ansicht der Abdichteinrichtung aus Figur 2 mit Blickrichtung gemäß Pfeil III von der Außenseite des Bandzylinders her,
- Figur 4: eine Ansicht der Abdichteinrichtung aus Figur 2 mit Blickrichtung gemäß Pfeil IV von der Innenseite des Bandzylinders her,
- Figur 5: eine Draufsicht auf das beim Ausführungsbeispiel gemäß Figur 2 verwendete Dichtelement in Alleindarstellung, wiederum mit Blickrichtung gemäß Pfeil IV.

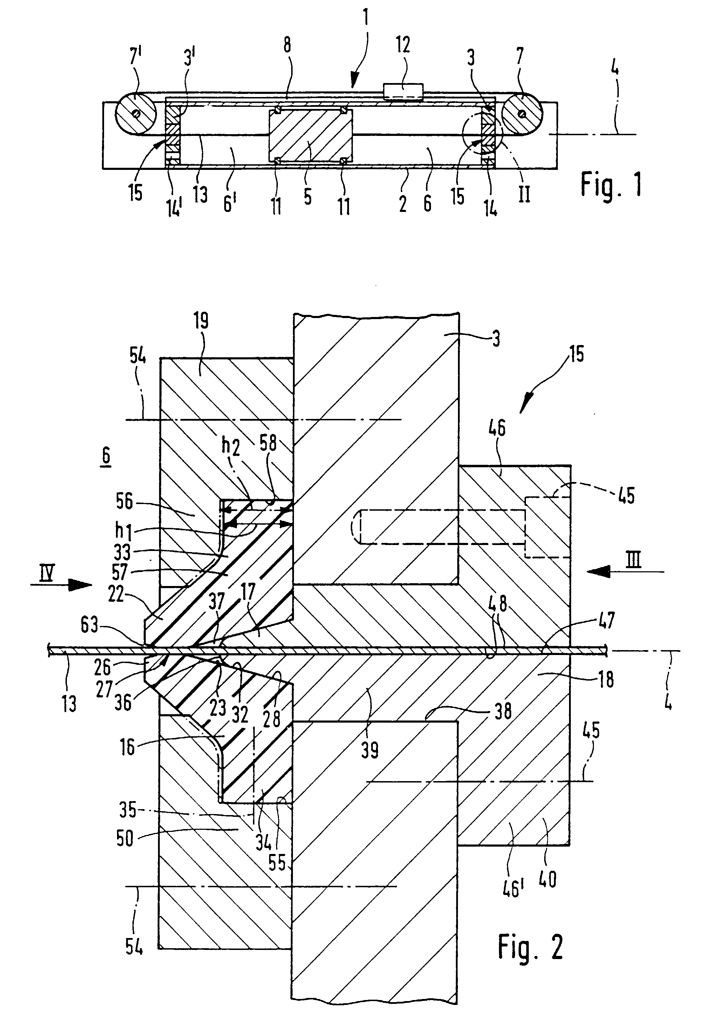

Der in Figur 1 gezeigte Bandzylinder 1 verfügt über ein rohrförmiges Zylindergehäuse 2, das an beiden Stirnseiten durch je eine Abschlußwand 3, 3' verschlossen ist. Im Innern des Zylindergehäuses 2 befindet sich ein in Längsrichtung 4 hin und her verschieblicher Kolben 5, der zwei Arbeitsräume 6, 6' dichtend voneinander abtrennt. Außen am Gehäuse ist im Bereich der beiden Abschlußwände 3, 3' jeweils ein zum Beispiel von einer Rolle gebildetes Umlenkmittel 7, 7' vorgesehen. Ferner befindet sich außen am Zylindergehäuse 2 eine insbesondere fest mit diesem verbundene Längsführung 8, die sich ebenfalls in Längsrichtung 4 erstreckt. An ihr ist ein schlittenähnliches Kraftabgabeglied 12 längsbeweglich geführt. Ein vorzugsweise aus Metall und/oder Kunststoff bestehendes Band 13 erstreckt sich zwischen dem Kolben 5 und dem Kraftabgabeglied 12, wobei es die beiden Arbeitsräume 6, 6' in Längsrichtung durchzieht, die beiden Abschlußwände 3, 3' durchdringt und um die beiden Umlenkmittel 7, 7' herumgeschlungen ist. Es kann sich um ein ein- oder mehrteiliges Band 13 handeln.

Ein Druckmittelkanal 14, 14' mündet in jeden Arbeitsraum 6, 6' und ermöglicht die Zufuhr und/oder Abfuhr eines insbesondere pneumatischen Druckmittels. Dadurch kann der Kolben 5 zu einer Bewegung in die eine oder andere Richtung veranlaßt werden. Infolge des Bandes 13, das als Zugmittel wirkt, wird die Bewegung des Kolbens 5 auf das Kraftabgabeglied 12 übertragen, das sich ebenfalls verlagert. Das Kraftabgabeglied 12 erlaubt einen Kraftabgriff und die Bewegung eines beliebigen, mit ihm verbundenen Gegenstandes.

Die Abdichtung zwischen den beiden Arbeitsräumen 6, 6' erfolgt über Dichtungen 11 des Kolbens 5. Der Durchdringungsbereich zwischen Band 13 und jeweiliger Abschlußwand 3, 3' wird von der erfindungsgemäßen Dichteinrichtung 15 abgedichtet. Der Aufbau der in Figur 1 an der rechten Abschlußwand 3 angeordneten Abdichteinrichtung 15 geht im einzelnen aus den Figuren 2 bis 5 hervor. Der Aufbau der an der gegenüberliegenden Abschlußwand 3' vorgesehenen Abdichteinrichtung 15 ist identisch.

Die beispielsgemäße Abdichteinrichtung 15 umfaßt ein Dichtelement 16, ein mit einem Abstützteil 17 kombiniertes Führungsteil 18 und einen Klemmring 19. Alle diese Teile sind an der Abschlußwand 3 lösbar befestigt. Der in Figur 2 links der Abschlußwand 3 liegende Bereich liegt im Innern des Zylindergehäuses 2 und stellt beim Ausführungsbeispiel den rechten Arbeitsraum 6 dar. Der in Figur 2 rechts der Abschlußwand 3 liegende Bereich liegt beim Ausführungsbeispiel außerhalb des Zylindergehäuses 2.

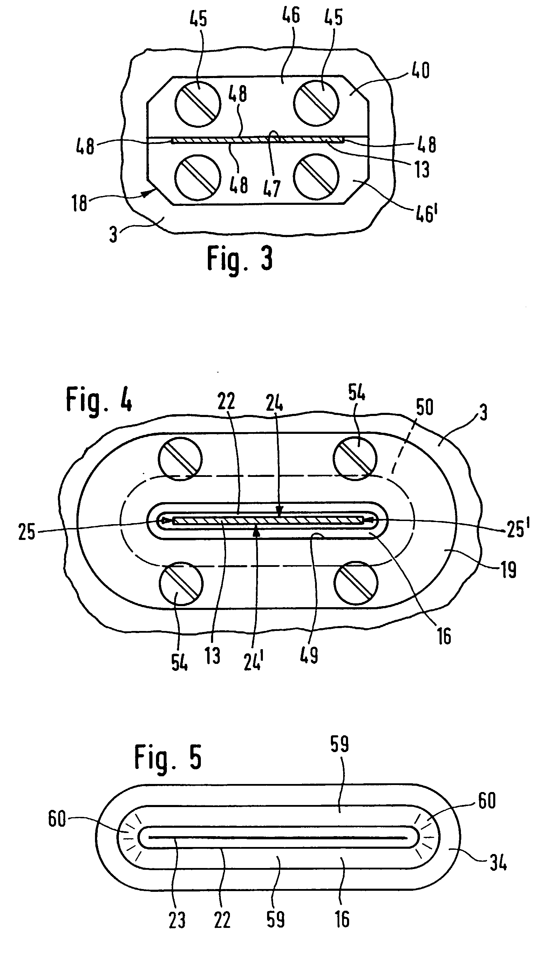

Ein wesentlicher Bestandteil der Abdichteinrichtung 15 ist das Dichtelement 16, das in Figur 5 nochmals in Alleinstellung gezeigt ist. Bei ihm handelt es sich um einen in sich geschlossenen Ringkörper, der vorzugsweise vollständig aus Material mit gummielastischen Eigenschaften besteht. Das vorliegende Dichtelement 16 ist ein einstückiges Elastomerteil. Das Dichtelement 16 verfügt über eine in sich geschlossene, ununterbrochen umlaufende Dichtlippe 22, die eine schlitzartige Durchbrechung 23 begrenzt. Letztere wird von dem Band 13 durchsetzt, wobei sie sowohl an den beiden Breitseiten 24, 24' als auch an den beiden Schmalseiten 25, 25' dichtend anliegt (Figur 4).

Die Dichtlippe 22 steht jedoch nicht mit ihrer gesamten aus Figur 2 ersichtlichen Länge im unmittelbaren Dichtkontakt zum Band 13. Den Dichtkontakt stellt vielmehr eine Dichtpartie 26 der Dichtlippe her, die nur einen Teil der Lippenlänge einnimmt, sich jedoch entlang des gesamten Umfanges der schlitzartigen Durchbrechung 23 und des durch diese hindurchgeführten Bandes 13 erstreckt. Die Dichtpartie 26 bildet eine Engstelle 27 der schlitzartigen Durchbrechung 23. Sie befindet sich beispielsgemäß im Bereich der Vorderseite des Dichtelementes 16, die dem Afbeitsraum 6 zugewandt ist.

Rückseitig schließt sich an die Engstelle 27 ein erweiterter Abschnitt 28 der schlitzartigen Durchbrechung 23 an. Dieser öffnet sich zur Rückseite des Dichtelementes 16, die der Abschlußwand 3 zugewandt ist. Der Schlitzquerschnitt des erweiterten Durchbrechungsabschnittes 28 vergrößert sich ausgehend von der Engstelle 27 in Richtung zur Rückseite des Dichtelementes 16, wobei zweckmäßigerweise eine stufenlose fortlaufende, insbesondere gleichmäßige Erweiterung vorliegt. Im Schnitt gemäß Figur 2 gesehen, wobei die Schnittebene rechtwinkelig zur Bandebene und in Längsrichtung 4 verläuft, kann der erweiterte Durchbrechungsabschnitt 28 wie abgebildet eine spitzwinkelige Kontur aufweisen.

Beispielsgemäß hat die Dichtlippe 22 entlang ihres gesamten Umfanges einen Schrägverlauf bezüglich der Längsrichtung 4. Ausgehend von der Dichtpartie 26 erstreckt sie sich vorzugsweise spitzwinkelig vom Band 13 weg in Richtung zur Rückseite des Dichtelementes, wobei sie mit ihrer auch als Lippenrücken bezeichenbaren Innenfläche 32 zumindest einen Teil der axialen Länge des erweiterten Durchbrechungsabschnittes 28 begrenzt.

An das der schlitzartigen Durchbrechung entgegengesetzte Ende der Dichtlippe, nachfolgend als Wurzelbereich 33 der Dichtlippe bezeichnet, schließt sich in einstückiger Weise eine ringförmige Haltepartie 34 an, die konzentrisch zur Dichtlippe 22 angeordnet ist. Sie ragt bund- oder flanschähnlich nach radial außen, ihre Ringebene verläuft zweckmäßigerweise in einer zur Bandebene rechtwinkeligen sowie rechtwinkelig zur Längsrichtung 4 verlaufenden Querebene 35. Über die Haltepartie 34 ist das Dichtelement 16 gegenüber der Abschlußwand 3 festgelegt. Die Dichtpartie 26 ist bezüglich der Haltepartie 34 in Richtung der Vorderseite des Dichtelementes 16 mit Abstand vorgelagert. Ersichtlich ergibt sich dadurch die Möglichkeit für die Dichtlippe 22, Radialbewegungen auszuführen. Der dabei wirksame Biegebereich fällt jedoch beim Ausführungsbeispiel nicht mit dem Wurzelbereich 33 zusammen, sondern ist diesem gegenüber ebenfalls in Richtung zur Vorderseite des Dichtelementes 16 vorgelagert. Dies rührt daher, daß in den erweiterten Durchbrechungsabschnitt 28 von der Rückseite des Dichtelementes 22 her das erwähnte Abstützteil 17 hineinragt, das die Innenfläche 32 der Dichtlippe 22 beaufschlagt. Der sich an den Wurzelbereich 33 unmittelbar anschließende Abschnitt der Dichtlippe 22 wird dadurch an einem Nachinnenbiegen gehindert, nur noch der dem Abstützteil 17 vorgelagerte Dichtlippenabschnitt bleibt radial verschwenkbar.

Die Außenkontur des Abstützteils 17 entspricht, soweit sie in den erweiterten Durchbrechungsabschnitt 28 hineinragt, dessen Innenkontur. Somit ergibt sich auch hier beim Ausführungsbeispiel ein Schrägverlauf der Außenkontur. Allerdings ist es zweckmäßig, wenn das Abstützteil 17 etwas kürzer ist als der erweiterte Durchbrechungsabschnitt 28, so daß sich innerhalb diesem zwischen der Engstelle 27 und der dieser zugewandten Endpartie 36 des Abstützteils 17 ein Freiraum 37 ergibt. Die Endpartie 36 ist dazuhin vorzugsweise abgerundet. Dieser Radius kann dazu beitragen, zu hohe Dehnungen seitens der Dichtlippe zu vermeiden.

Das beispielsgemäße Abstützteil 17 ist von einem stirnseitigen Endabschnitt des ebenfalls schon erwähnten Führungsteils 18 gebildet. Letzteres ist vorgesehen, um eine exakte Band-Längsführung beim Durchdringen der Abschlußwand 3 zu erzielen und zugleich die möglichen Querbewegungen des Bandes 13 zu minmieren, die die Abdichtung im Bereich des Dichtelementes 16 beeinträchtigen könnten.

Die Abschlußwand 3 verfügt über eine in Längsrichtung 4 durchgehende Ausnehmung, die beim Ausführungsbeispiel eine ZentrierDurchbrechung 38 bildet, in die das Führungsteil 18 von außerhalb des Zylindergehäuses 2 her mit einem komplementären Zentrierabschnitt 39 eingesteckt ist. Die Einstecktiefe wird begrenzt von einem Anschlagbund 40 des Führungsteils 18, der im Anschluß an den Zentrierabschnitt 39 nach radial außen vorspringt. Das Abstützteil 17 schließt sich an der dem Anschlagbund 40 entgegengesetzten Stirnseite an den Zentrierabschnitt 39 an. Die Länge des Zentrierabschnittes 39 entspricht beim Ausführungsbeispiel derjenigen der Zentrier-Durchbrechung 38, so daß lediglich das Abstützteil 17 nach innen über die Abschlußwand 3 vorsteht. Das Führungsteil besteht vorzugsweise aus Metall, insbesondere aus Messing.

Die Befestigung des Führungsteils 18 an der Abschlußwand 3 erfolgt beispielsweise im Rahmen einer Schraubverbindung, indem der Anschlagbund 40 gegenüber der Abschlußwand 3 festgelegt wird. In den Figuren 2 und 3 sind Befestigungsschrauben 45 angedeutet, die in die Abschlußwand 3 eingeschraubt sind und deren Köpfe zweckmäßigerweise versenkt im Anschlagbund 40 zu liegen kommen.

Schon allein aus Gründen der vereinfachten Montage empfiehlt es sich, das Führungsteil 18 mehrteilig auszubilden. Beispielsgemäß besteht es aus zwei Führungselementen 46, 46', die unter Freilassung einer schlitzartigen Führungsöffnung 47 seitlich aneinander angesetzt sind. Das Band 13 ist durch diese Führungsöffnung 47 hindurchgeführt, die in einer Ebene mit der schlitzartigen Durchbrechung 23 bzw. der Engstelle 27 ausgerichtet ist. Die Begrenzungsflächen der Führungsöffnung 47 bilden Führungsflächen 48, wobei der Querschnitt der Führungsöffnung 47 demjenigen des Bandes 13 entspricht, so daß letzteres allseits sowohl an den Breitseiten 24, 24' als auch an den Schmalseiten 25, 25' von einer Führungsfläche 48 berührend flankiert wird. Dieser Führungskontakt erstreckt sich vorzugsweise über die gesamte axiale Länge des Führungsteils 18, eine Führung erfolgt also auch im Bereich des Abstützteils 17, das entsprechend vom Band 13 durchsetzt wird.

Wie man der Figur 3 entnimmt, kann die Führungsöffnung 47 dadurch hergestellt sein, daß in das eine Führungselement 46' eine Flachnut eingebracht wird, deren Breite der Bandbreite und deren Höhe der Bandhöhe entspricht. Somit sind beide schmalseitigen und eine breitseitige Führungsfläche 48 an dem einen der Führungselemente 46' vorgesehen. Am anderen Führungselement 46 muß dann nur noch die zweite breitseitige Führungsfläche 48 vorgesehen werden, was einfach durch eine Planbearbeitung realisierbar ist. Zweckmäßig ist es, wenn die beiden Führungselemente 46, 46' relativ zueinander quer zur Bandebene verstellbar sind, so daß bei Bedarf ein toleranzbedingter Feinabgleich der Höhe der Führungsöffnung 37 möglich ist.

Der bereits erwähnte Klemmring 19 dient zur Befestigung des Dichtelementes 16 an der Innenfläche der Abschlußwand 3. Er kann mehrteilig, oder wie beim Ausführungsbeispiel, einteilig ausgebildet sein. Er ist nach Art eines Überwurfteiles von der Vorderseite her auf das Dichtelement 16 aufgesetzt, wobei dessen Dichtlippe 22 in die Ringöffnung 49 des Klemmringes hineinragt. Der radial außerhalb der Haltepartie 34 liegende Überwurfabschnitt 50 umschließt die Haltepartie 34 konzentrisch und liegt an der Innenfläche der Abschlußwand 3 an. Unter Verwendung geeigneter Befestigungsmittel 54, beim Ausführungsbeispiel sind wiederum Schrauben vorgesehen, ist der Klemmring 19 in dieser Position an der Abschlußwand 3 festgelegt. Die Kontur der dem Band 13 zugewandten inneren Begrenzungsfläche 55 des Überwurfabschnittes 50 stimmt mit der zugeordneten Außenkontur der Haltepartie 34 überein, so daß das Dichtelement 16 innerhalb des Klemmringes 19 exakt in Querrichtung fixiert und zentriert ist.

Der Klemmring 19 verfügt desweiteren über eine nach Art eines Ringbundes ausgestaltete Klemmpartie 56, die ausgehend vom Überwurfabschnitt 50 mit Abstand zur Abschlußwand 3 nach innen in Richtung des Bandes 13 ragt. Die Erstreckung geht so weit, daß die Klemmpartie 56 sowohl der Haltepartie 34 als auch einem sich daran anschließenden Längenabschnitt 57 der Dichtlippe 22 vorgelagert ist.

Das Dichtelement 16 ist zwischen der Abschlußwand 3 und der Klemmpartie 56 eingespannt. Die Klemmpartie 56 begrenzt mit der Abschlußwand 3 einen ringförmigen Einspannraum 58 dessen in Längsrichtung 4 gemessene Höhe h₁ etwas geringer ist als die Höhe h₂ der im Einspannraum 58 liegende Partie des Dichtelementes 16 bei nicht eingespanntem Zustand. Letzterer ist in Figur 2 strichpunktiert angedeutet.

Das Dichtelement 16 besteht beim Ausführungsbeispiel aus inkompressiblem gummielastischem Material. Durch Einwirkung der Klemmpartie 56 wird die im Einspannraum 58 liegende Partie des Dichtelementes 16 gepreßt, wobei Material in Richtung des Bandes 13 verlagert wird. Dadurch ergibt sich zum einen im Bereich der Haltepartie 34 ein sehr fester Sitz, die Haltepartie 34 wirkt als statische Dichtung, die einen Druckmittelaustritt verhindert. Desweiteren führt die Materialverdrängung zu einer radialen Vorspannung der Dichtlippe 22 bezüglich des Bandes 13 in den Bereichen, die dem Abstützteil 17 vorgelagert sind. Die Dichtkraft wird also konzentriert zur Dichtpartie 26 geleitet, wo infolgedessen eine hohe Flächenpressung gegenüber dem Band 13 ausgeübt wird und trotz geringer Länge des Dichtspaltes eine überraschend gute Abdichtwirkung erzielt wird. Infolge der sich einstellenden Druckverstärkung im Anlagebereich mit dem Band 13, kann das Dichtelement aus relativ weichem, normalerweise ziemlich instabilem, schlaffem Material bestehen. Durch das Zusammenwirken zwischen Abstützteil 17 und Klemmring 19 wird im Bereich des Dichtkontaktes eine ausreichende Druckverstärkung erzielt.

Man wird das Dichtelement 16 normalerweise so ausgestalten, daß die schlitzartige Durchbrechung 23 bei entferntem Band 13 geschlossen ist. Die einzelnen Abschnitte der Dichtpartie 26 liegen dann unmittelbar aneinander an. Eine Aufweitung im erforderlichen Maße erfolgt beim Hindurchstecken des Bandes 13.

Die Herstellung des einstückigen Dichtelementes erfolgt zweckmäßigerweise durch Preßvulkanisieren mit einem Oberstempel und einem Unterstempel. Nach Beendigung des Vulkanisationsprozesses verbleibt im Bereich der späteren Dichtpartie 26 eine membran- oder hautähnliche dünne Wand, die anschließend durchtrennt wird. Auf diese Weise ist gewährleistet, daß die schlitzartige Durchbrechung 23 auch bei sehr dünnen Bändern 13 mit genügend großer Vorspannung an den Bandflächen anliegt.

Die Ringgestalt des Dichtelementes 16 ist zweckmäßigerweise unkreisförmig. Es bietet sich an, die quer zur Längsrichtung 4 gemessen Ringdicke entlang des gesamten Umfanges annähernd konstant zu halten, so daß sich ein leistenähnlicher Körper ergibt, wie aus Figur 5 zu ersehen ist. Ausgehend von der Haltepartie 34 bildet die Dichtlippe 22 eine umlaufende Erhebung mit zwei sich linear erstreckenden Längsseiten 59 und zwei gerundeten Schmalseiten 60.

Bei einteiliger Ausführung des Klemmringes 19 empfiehlt es sich, seine Aussparung bzw. Ringöffnung 49 derart zu gestalten, daß sich das Band auch dann problemlos hindurchführen läßt, wenn es mit Befestigungsmitteln oder dergleichen z.B. mit einem oder mehreren Spannschlössern, ausgestattet ist. Gleiches gilt auch hinsichtlich der Zentrierdurchbrechung 38.

Am vorderen freien Endbereich der Dichtlippe 22 ist zur schlitzartigen Durchbrechung 23 hin zweckmäßigerweise noch eine Anfasung bzw. Dichtlippenfase 63 oder dergleichen vorgesehen. Sie ist vorzugsweise in Umfangsrichtung der Durchbrechung 23 ununterbrochen umlaufend. Ihre Aufgabe besteht insbesondere darin, ein Einbeulen der Dichtlippe 22 bei Druckbeaufschlagung und stemmender Beanspruchung zu verhindern. Das Einbeulen könnte unzulässig hohe Materialdehnungen hervorrufen.

Beim Ausführungsbeispiel ist die Elastizität des Dichtelements 16 zumindest im Bereich der Dichtlippe 22 so groß, daß eine Aufweitung der schlitzartigen Durchbrechung 23 in einem Maße möglich ist, daß nicht nur das Band 13, sondern auch an diesem eventuell angeordnete Befestigungsmittel bei der Montage des Bandzylinders hindurchführbar sind. Häufig sind an den Bandenden in der Zeichnung nicht weiter dargestellte Spannschlösser zur Verbindung mit dem Kolben 5 und/oder Kraftabgabeglied 12 vorhanden, die einen größeren Querschnitt einnehmen als das Band 13. Zweckmäßig ist es hierzu, die Dichtlippe 22 mit einer gewissen Überbreite zu versehen.

Zu dem Abstützteil 17 ist noch aufzuführen, daß dieses vorzugsweise eine sogenannte Spaltextrusion der Dichtlippe 22 im Bereich der Zylinderdeckel verhindert.

Vorteilhaft ist ferner, daß die Erfindung eine Begrenzung der Dichtspaltlänge in Bandlängsrichtung auf das mindestens notwendige Maß ermöglicht, da die Dichtheit einer Dichtstelle erstrangig durch die Gewährleistung einer bestimmten druckabhängigen Flächenpressung entlang der Dichtstelle bewirkt wird. Man erzielt eine Druckverstärkung, wobei die Dichtspaltlänge von untergeordneter Bedeutung ist, jedoch möglichst klein gehalten werden sollte, um unnötig hohe Reibungsverluste zu vermeiden.

Der Klemmring 19 übt zweckmäßigerweise nicht nur aufgrund der Materialverdrängung des Dichtelementes 16, sondern auch durch mittelbare Einwirkung auf die Dichtlippe 22 im Bereich der freitragenden Lippenkontur eine Vorspannkraft aus.

## Patentansprüche

1. Abdichteinrichtung für einen Bandzylinder, zur Abdichtung des als Zugmittel dienenden bewegbaren Bandes (13) gegenüber der von diesem durchsetzten Abschlußwand (3,3') des Zylindergehäuses (2), mit einem als in sich geschlossener Ringkörper ausgebildeten Dichtelement (16), das eine ununterbrochen umlaufende Dichtlippe (22) mit gummielastischen Eigenschaften aufweist, die eine ein Hindurchführen des Bandes (13) ermöglichende schlitzartige Durchbrechung (23) begrenzt und die sowohl an den beiden Breitseiten (24, 24') als auch an den beiden Schmalseiten (25, 25') des hindurchgeführten Bandes (13) dichtend anliegt, wobei die schlitzartige Durchbrechung (23) des Dichtelementes (16) eine Engstelle (27) aufweist, die von der mit dem hindurchgeführten Band (13) zusammenarbeitenden Dichtpartie (26) der Dichtlippe (22) begrenzt wird, wobei sich rückseitig an die Engstelle (27) ein zumindest teilweise von der Dichtlippe (22) begrenzter erweiterter Durchbrechungsabschnitt (28) anschließt, dadurch gekennzeichnet, daß in den erweiterten Durchbrechungsabschnitt (28) von der Rückseite des Dichtelementes (16) her ein vom Band (13) durchsetzbares Abstützteil (17) hineinragt, an dem die Dichtlippe (22) mit ihrer dem erweiterten Durchbrechungsabschnitt (28) zugewandten Innenfläche (32) zumindest teilweise anliegt.

2. Abdichteinrichtung nach Anspruch 1, dadurch gekennzeichnet, daß das Dichtelement (16) ein einstückiges Elastomerteil ist.

3. Abdichteinrichtung nach Anspruch 1 oder 2, dadurch gekennzeichnet, daß sich der Schlitzquerschnitt des erweiterten Durchbrechungsabschnittes (28) ausgehend von der Engstelle (27) in Richtung zur Rückseite des Dichtelementes (16) fortlaufend und insbesondere gleichmäßig erweitert, wobei der erweiterte Durchbrechungsabschnitt (28) eine spitzwinkelige Kontur aufweisen kann.

4. Abdichteinrichtung nach einem der Ansprüche 1 bis 3, dadurch gekennzeichnet, daß innerhalb des erweiterten Durchbrechungsabschnittes (28) zwischen der Engstelle (27) und der dieser zugewandten Endpartie (36) des Abstützteils (17) ein Freiraum (37) vorhanden ist.

5. Abdichteinrichtung nach einem der Ansprüche 1 bis 4, dadurch gekennzeichnet, daß die der Engstelle (27) zugewandte Endpartie (36) des Abstützteils (17) abgerundet ist.

6. Abdichteinrichtung nach einem der Ansprüche 1 bis 5, dadurch gekennzeichnet, daß ein Führungsteil (18) vorhanden ist, das eine im betriebsbereiten Zustand vom Band (13) durchsetzte schlitzartige Führungsöffnung (47) aufweist, deren Begrenzungsflächen Führungsflächen (48) bilden, die ringsum am hindurchgeführten Band (13) anliegen, wobei das Führungsteil (18) zweckmäßigerweise mehrteilig ausgebildet ist und mindestens zwei Führungselemente (46, 46') aufweist, die unter Freilassung der Führungsöffnung (47) aneinander ansetzbar sind, wobei die zwischen den Führungselementen (46, 46') befindlichen Trennstellen zur Führungsöffnung (47) ausmünden.

7. Abdichteinrichtung nach Anspruch 6, dadurch gekennzeichnet, daß das Führungsteil (18) einen Zentrierabschnitt (39) aufweist, mit dem es in eine komplementäre Zentrier-Durchbrechung (38) der zugeordneten Abschlußwand (3) des Bandzylinders (1) einsetzbar ist.

8. Abdichteinrichtung nach Anspruch 6 oder 7, dadurch gekennzeichnet, daß das Abstützteil (17) von einem Endabschnitt des Führungsteils (18) gebildet ist.

9. Abdichteinrichtung nach Anspruch 8, dadurch gekennzeichnet, daß das Dichtelement (16) im am Bandzylinder (1) montierten Zustand mit dessen Kolben (5) zugewandter Dichtlippe (22) an der Innenseite der zugeordneten Abschlußwand (3) angeordnet ist, wobei das Führungsteil (18) in einer Zentrier-Durchbrechung (38) der Abschlußwand (3) einsitzt und der als Abstützteil (17) fungierende Endabschnitt des Führungsteils (18) über die Abschlußwand (3) nach innen übersteht und in den zugewandten erweiterten Durchbrechungsabschnitt (28) der schlitzartigen Durchbrechung (23) hineinragt.

10. Abdichteinrichtung nach einem der Ansprüche 7 bis 9, dadurch gekennzeichnet, daß das Führungsteil (18) im Anschluß an den Zentrierabschnitt (39) einen nach radial außen vorspringenden Anschlagbund (40) aufweist, unter Vermittlung dessen es an der zugeordneten Abschlußwand (3) des Bandzylinders (1) festlegbar ist.

11. Abdichteinrichtung nach einem der Ansprüche 1 bis 10, dadurch gekennzeichnet, daß das Dichtelement (16) eine ringförmige Haltepartie (34) aufweist, die sich an dem der schlitzartigen Durchbrechung (23) entgegengesetzten Ende der Dichtlippe (22) an diese anschließt und bundähnlich nach radial außen ragt, wobei die mit dem hindurchgeführten Band (13) dichtend zusammenarbeitende Dichtpartie (26) der Dichtlippe (22) gegenüber der Haltepartie (34) zur Vorderseite des Dichtelementes (16) vorgelagert ist.

12. Abdichteinrichtung nach Anspruch 11, dadurch gekennzeichnet, daß ein an der Innenseite der Abschlußwand (3) des Bandzylinders (1) festlegbarer, die Dichtlippe (22) vorzugsweise gegen das Band (13) vorspannender Klemmring (19) vorhanden ist, der nach Art eines Überwurfteiles derart vorderseitig auf das Dichtelement (16) aufsetzbar ist, daß dessen Dichtlippe (22) in die Ringöffnung (49) des Klemmringes (19) hineinragt und eine ringförmige Klemmpartie (56) des Klemmringes (19) gegen die Vorderseite der Haltepartie (34) und/oder gegen einen sich an die Haltepartie (34) anschließenden Abschnitt (57) der Dichtlippe (22) arbeitet, wobei das Dichtelement (16) zweckmäßigerweise einstückig aus inkompressiblem elastischem Material ausgebildet ist und die Dichtlippe (22) infolge einer durch die Klemmung verursachten Materialverdrängung eine Vorspannung gegenüber dem hindurchgeführten Band (13) erfährt.

13. Abdichteinrichtung nach einem der Ansprüche 1 bis 12, dadurch gekennzeichnet, daß die schlitzartige Durchbrechung (23) des Dichtelementes (16) eine Engstelle (27) aufweist, die von der mit dem hindurchgeführten Band (13) zusammenarbeitenden Dichtpartie (26) der Dichtlippe (22) begrenzt wird, wobei die schlitzartige Durchbrechung (23) im Bereich der Dichtpartie (22) bei entferntem Band (13) infolge elastischen Aneinanderanliegens der Dichtpartieabschnitte verschlossen ist, und wobei die schlitzartige Durchbrechung (23) im Bereich der Engstelle (27) zweckmäßigerweise von einer durchtrennten, membran- oder hautähnlichen dünnen Wand gebildet ist.

14. Abdichteinrichtung nach einem der Ansprüche 1 bis 13, dadurch gekennzeichnet, daß die Durchbrechung (23) infolge der Elastizität der Dichtlippe (22) mindestens soweit elastisch aufweitbar ist, daß ein am Band (13) insbesondere an dessen Endbereich angeordnetes Spannschloß oder ein sonstiges Befestigungsmittel bei der Montage des Bandzylinders hindurchführbar ist.

15. Abdichteinrichtung nach einem der Ansprüche 1 bis 14, dadurch gekennzeichnet, daß am freien Ende der Dichtlippe (22) in dem der schlitzartigen Durchbrechung (23) zugewandten Bereich eine sich entlang des Umfanges der schlitzartigen Durchbrechung erstreckende Dichtlippenfase (63) vorgesehen ist.

## Claims

1. Sealing device for a band cylinder for sealing the movable band (13) serving as a means of traction against the end wall (3, 3') of the cylinder housing (2) through which it runs, with a sealing element (16) designed as a self-contained annular body having a continuous sealing lip (22) with rubber elastic properties bordering a slot-like opening (23) permitting the passage of the band (13) and contacting both the wide sides (24, 24') and the edges (25, 25') of the passing band (13) to form a seal, the slot-like opening (23) of the sealing element (16) having a narrowing (27) bordered by the sealing section (26) of the sealing lip (22) acting together with the passing band (13), a widened opening section (28) at least partially bordered by the sealing lip (22) following the narrowing (27) towards the rear, characterized in that a support part (17) permitting the passage of the band (13) projects into the widened opening section (28) from the rear of the sealing element (16), against which support part (17) the sealing lip (22) rests at least partially with its inner surface (32) adjacent to the widened opening section (28).

2. Sealing device according to Claim 1, characterized in that the sealing element (16) is a one-piece elastomer part.

3. Sealing device according to Claim 1 or 2, characterized in that the slot cross-section of the widened opening section (28) continuously and evenly widens from the narrowing (27) towards the rear of the sealing element (16), the widened opening section (28) perhaps enclosing an acute angle.

4. Sealing device according to any of Claims 1 to 3, characterized in that a space (37) is provided within the widened opening section (28) between the narrowing (27) and the adjacent end section (36) of the support part (17).

5. Sealing device according to any of Claims 1 to 3, characterized in that the end section (36) of the support part (17) which is adjacent to the narrowing (27) is rounded.

6. Sealing device according to any of Claims 1 to 3, characterized in that a guide part (18) having slot-like guide openings (47) for the passage of the band (13) in the ready state is provided, their mating surfaces forming guide surfaces (48) in allround contact with the passing band (13), the guide part (18) being preferably designed in several parts and having at least two guide elements (46, 46') attachable to each other while leaving the guide opening (47), the points of separation between the guide elements (46, 46') leading towards the guide opening (47).

7. Sealing device according to Claim 6, characterized in that the guide part (18) has a centring section (39) for installation into a complementary centring opening (38) of the associated end wall (3) of the band cylinder (1)

8. Sealing device according to Claim 6 or 7, characterized in that the support part (17) is represented by an end section of the guide part (18).

9. Sealing device according to Claim 8, characterized in that the sealing element (16), when mounted on the band cylinder (1), is so arranged that the sealing lip (22) facing its piston (5) is located on the inside of the associated end wall (3), the guide part (18) sitting in a centring opening (38) of the end wall (3) and the end section of the guide part (18) forming the support part (17) projecting inwards through the end wall (3) and into the adjacent widened opening section (38) of the slot-like opening (23).

10. Sealing device according to any of Claims 7 to 9, characterized in that the guide part (18) has a stop collar (40) projecting radially outwards next to the centring section (39), by means of which it can be located at the associated end wall (3) of the band cylinder (1).

11. Sealing device according to any of Claims 1 to 10, characterized in that the sealing element (16) has an annular holding section (34) lying next to the end of the sealing lip (22) opposite the slot-like opening (23) and projecting radially outwards in the manner of a collar, the sealing section (26) of the sealing lip (22) forming a seal with the passing band (13) lying towards the front of the sealing element (16) relative to the holding section (34).

12. Sealing device according to Claim 11, characterized in that a clamping ring (19) locatable on the inside of the end wall (3) of the band cylinder (1) and preferably biassing the sealing lip (22) towards the band (13) is provided and can be so fitted to the front of the sealing element (16) in the manner of a coupling part that the sealing lip (22) projects into the annular opening (49) of the clamping ring (19) and an annular clamping section (56) of the clamping ring (19) acts against the front of the holding section (34) and/or a section (57) of the sealing lip (22) adjacent to the holding section (34), the sealing element (16) being expediently made in one piece of an incompressible elastic material and the sealing lip (22) being biassed towards the passing band (13) as a result of a material displacement caused by the clamping action.

13. Sealing device according to any of Claims 1 to 12, characterized in that the slot-like opening (23) of the sealing element (16) has a narrowing (27) bordered by the sealing section (26) of the sealing lip (22) acting together with the passing band (13), the slot-like opening (23) being closed on removal of the band (13) in the area of the sealing section (22) as a result of the elastic contact between the parts of the sealing section, and the slot-like opening (23) in the area of the narrowing (27) being expediently formed by a broken membrane- or skin-like thin wall.

14. Sealing device according to any of Claims 1 to 13, characterized in that the opening (23) can, owing to the elasticity of the sealing lip (22), be flexibly widened at least far enough to permit a turnbuckle or other fastening means located on the band (13), in particular its end area, to pass when installing the band cylinder.

15. Sealing device according to any of Claims 1 to 14, characterized in that the free end of the sealing lip (22) in the area adjacent to the slot-like opening (23) is provided with a sealing lip chamfer (63) extending along the circumference of the slot-like opening.

## Revendications

1. Dispositif d'étanchéité pour un vérin à bande, pour l'étanchéité de la bande (13), déplaçable, servant de moyen de traction, par rapport à la paroi de fermeture (3, 3'), traversée par celle-ci, du corps de vérin (2), comportant un élément d'étanchéité (16) conformé en corps annulaire fermé, qui présente une lèvre d'étanchéité (22) périphérique, ininterrompue, avec des propriétés élastiques à la manière du caoutchouc, qui délimite un ajour (23) en fente, permettant un passage de la bande (13) et qui s'applique, en assurant l'étanchéité, contre les deux côtés larges (24, 24') ainsi que contre les deux côtés étroits (25, 25') de la bande (13) passant à travers, dans lequel l'ajour (23) en fente de l'élément d'étanchéité (16) présente un point d'étranglement (27), qui est délimité par la partie d'étanchéité (26), coopérant avec la bande (13) passant à travers, de la lèvre d'étanchéité (22) , dans lequel à l'arrière du point d'étranglement (27) se raccorde une portion d'ajour élargie (28), limitée au moins en partie par la lèvre d'étanchéité (22), caractérisé en ce que dans la portion d'ajour élargie (28) pénètre, à partir de l'arrière de l'élément d'étanchéité (16), un élément d'appui (17) pouvant être traversé par la bande (13), contre lequel s'applique, au moins en partie, la lèvre d'étanchéité (22), par sa face intérieure (32), tournée vers la portion d'ajour élargie (28).

2. Dispositif d'étanchéité selon la revendication 1, caractérisé en ce que l'élément d'étanchéité (16) est un élément en élastomère réalisé d'une seule pièce.

3. Dispositif d'étanchéité selon la revendication 1 ou 2, caractérisé en ce que la section transversale de fente de la portion d'ajour élargie (28) s'élargit en continu et en particulier uniformément, à partir du point d'étranglement (27) , en direction de la face arrière de l'élément d'étanchéité (16), la portion d'ajour élargie (28) pouvant présenter un contour à angle aigu.

4. Dispositif d'étanchéité selon l'une des revendications 1 à 3, caractérisé en ce qu'à l'intérieur de la portion d'ajour élargie (28) se trouve un espace libre (37), situé entre le point d'étranglement (27) et la partie d'extrémité (36), tournée vers celui-ci, de l'élément d'appui (17).

5. Dispositif d'étanchéité selon l'une des revendications 1 à 4, caractérisé en ce que la partie d'extrémité (36), tournée vers le point d'étranglement (27), de l'élément d'appui (17), est arrondie.

6. Dispositif d'étanchéité selon l'une des revendications 1 à 5, caractérisé en ce qu'il est prévu une pièce de guidage (18), qui présente une ouverture de guidage (47) en fente, traversée par la bande (13), à l'état de fonctionnement, dont les surfaces de délimitation forment des surfaces de guidage (48), qui s'appliquent tout autour contre la bande (13) passant à travers, l'élément de guidage (18) étant avantageusement en plusieurs parties et présentant au moins deux éléments de guidage (46, 46'), qui peuvent s'appliquer l'un contre l'autre en laissant libre l'ouverture de guidage (47), les zones de séparation, se trouvant entre les éléments de guidage (46, 46'), débouchant vers l'ouverture de guidage (47).

7. Dispositif d'étanchéité selon la revendication 6, caractérisé en ce que la pièce de guidage (18) présente une portion de centrage (39), par laquelle elle peut être insérée dans un ajour de centrage (38) complémentaire de la paroi de fermeture (3) correspondante du vérin à bande (1).

8. Dispositif d'étanchéité selon la revendication 6 ou 7, caractérisé en ce que l'élément d'appui (17) est formé par une portion d'extrémité de la pièce de guidage (18).

9. Dispositif d'étanchéité selon la revendication 8, caractérisé en ce que l'élément d'étanchéité (16), à l'état monté sur le vérin à bande (1), est placé avec la lèvre d'étanchéité (22), tournée vers son piston (5), contre la face intérieure de la paroi de fermeture (3) correspondante, la pièce de guidage (18) étant insérée dans un ajour de centrage (38) de la paroi de fermeture (3) et la portion d'extrémité, servant d'élément d'appui (17), de la pièce de guidage (18), dépassant vers l'intérieur de la paroi de fermeture (3) et s'engageant dans la portion d'ajour élargie (28), tournée vers celle-ci, de l'ajour (23) en fente.

10. Dispositif d'étanchéité selon l'une des revendications 7 à 9, caractérisé en ce que la pièce de guidage (18) présente, à la suite de la portion de centrage (39), un épaulement de butée (40) faisant saillie radialement vers l'extérieur, par l'intermédiaire duquel elle peut être fixée contre la paroi de fermeture (3) correspondante du vérin à bande (1).

11. Dispositif d'étanchéité selon l'une des revendications 1 à 10, caractérisé en ce que l'élément d'étanchéité (16) présente une partie de maintien (34) annulaire, qui se rattache à la lèvre d'étanchéité (22), à l'extrémité opposée à l'ajour (23) en fente, de la lèvre d'étanchéité (22) , et dépasse radialement vers l'extérieur à la manière d'un épaulement, la partie d'étanchéité (26) coopérant de manière à assurer l'étanchéité avec la bande (13) passant à travers, de la lèvre d'étanchéité (22), étant placée devant la partie de maintien (34), vers le côté avant de l'élément d'étanchéité (16).

12. Dispositif d'étanchéité selon la revendication 11, caractérisé en ce qu'il est prévu une bague de serrage (19), pouvant être fixée contre le côté intérieur de la paroi de fermeture (3) du vérin à bande (1), précontraignant la lèvre d'étanchéité (22) de préférence contre la bande (13), qui peut être placée sur le côté avant de l'élément d'étanchéité (16), à la manière d'une pièce en chapeau, de telle sorte que sa lèvre d'étanchéité (22) s'engage dans l'ouverture annulaire (49) de la bague de serrage (19) et une partie de serrage (56) annulaire de la bague annulaire (19) travaille contre la face avant de la partie de maintien (34) et/ou contre une portion (57), se raccordant à la partie de maintien (34), de la lèvre d'étanchéité (22), l'élément d'étanchéité (16) étant avantageusement formé d'une seule pièce dans un matériau élastique incompressible et la lèvre d'étanchéité (22) subissant une précontrainte par rapport à la bande (13) passant à travers, par suite d'un déplacement de matière causé par le serrage.

13. Dispositif d'étanchéité selon l'une des revendications 1 à 12, caractérisé en ce que l'ajour (23) en fente de l'élément d'étanchéité (16) présente un point d'étranglement (27), qui est délimité par la partie d'étanchéité (26), coopérant avec la bande (13) passant à travers, de la lèvre d'étanchéité (22), l'ajour (23) en fente étant fermé dans la zone de la partie d'étanchéité (22), lorsque la bande (13) est éloignée, par suite d'une application élastique des portions de parties d'étanchéité l'une contre l'autre, et l'ajour (23) en fente étant avantageusement formé, dans la zone du point d'étranglement (27), par une paroi mince, réalisée à la manière d'une membrane ou d'une pellicule, et sectionnée.

14. Dispositif d'étanchéité selon l'une des revendications 1 à 13, caractérisé en ce que l'ajour (23) peut être élargi élastiquement, par suite de l'élasticité de la lèvre d'étanchéité (22), au moins suffisamment pour qu'il soit possible de faire passer au travers, lors du montage du vérin à bande, un tendeur, placé en particulier dans sa zone d'extrémité ou un autre moyen de fixation.

15. Dispositif d'étanchéité selon l'une des revendications 1 à 14, caractérisé en ce qu'à l'extrémité libre de la lèvre d'étanchéité (22) il est prévu, dans la zone tournée vers l'ajour (23) en fente, un chanfrein de lèvre d'étanchéité (63) s'étendant le long du pourtour de l'ajour en fente.
